**Europäisches Patentamt**

**European Patent Office**

**Office européen des brevets**

(19)

(11) Veröffentlichungsnummer: **0 008 392**
**B1**

(12) **EUROPÄISCHE PATENTSCHRIFT**

(45) Veröffentlichungstag der Patentschrift: **10.03.82**

(21) Anmeldenummer: **79102761.8**

(22) Anmeldetag: **01.08.79**

(51) Int. Cl.³: **B 62 D 33/08,** B 60 P 1/56,
B 60 P 3/42

(54) **Fahrzeug für den wahlweisen Transport von Gütern fester Raumform oder von fliessfähigen Gütern.**

(30) Priorität: **23.08.78 DE 2836754**

(43) Veröffentlichungstag der Anmeldung:
**05.03.80 Patentblatt 80/5**

(45) Bekanntmachung des Hinweises auf die Patenterteilung:
**10.03.82 Patentblatt 82/10**

(84) Benannte Vertragsstaaten:
**AT BE CH FR GB IT LU NL SE**

(56) Entgegenhaltungen:
**DE - C - 969 548**
**DE - C - 2 308 029**
**DE - U - 1 835 717**
**US - A - 3 692 363**
**US - A - 3 746 395**
**US - A - 3 901 552**

(73) Patentinhaber: **Schröder, Georg**
**Lutzelwiger Strasse 10**
**D-3589 Homberg-Cassdorf (DE)**

(72) Erfinder: **Schröder, Georg**
**Lutzelwiger Strasse 10**
**D-3589 Homberg-Cassdorf (DE)**

(74) Vertreter: **Gaiser, Hartmut, Dipl.-Ing.**
**Sulzbacher Strasse 39**
**D-8500 Nürnberg (DE)**

## Fahrzeug für den wahlweisen Transport von Gütern fester Raumform oder von fließfähigen Gütern

Die Erfindung bezieht sich auf ein Fahrzeug für den wahlweisen Transport von Gütern fester Raumform oder von fließfähigen, wie pulverförmigen, körnigen oder flüssigen Gütern.

An ein solches Mehrzweckfahrzeug müssen vielseitige Anforderungen gestellt werden. Die wichtigste Forderung besteht darin, dem faltbaren Behälter die notwendige Dichtigkeit und Haltbarkeit zu geben. Außerdem soll bei Benutzung des Fahrzeuges zur Beförderung von Gütern fester Raumform möglichst keine Beschränkung der Ladefähigkeit aufgrund des faltbaren Behälters eintreten und schließlich soll auch die Umrüstung des Fahrzeuges von der einen Betriebsweise in die andere möglichst mühelos und rasch erfolgen können.

Es sind bereits die verschiedensten Lösungen für die konstruktive Gestaltung derartiger Fahrzeuge bekannt geworden, die aber sämtlich den gestellten Anforderungen höchstens zum Teil gerecht geworden sind und deshalb auch bisher keinen Eingang in die Praxis gefunden haben.

In der US-PS 3 901 552 ist ein Fahrzeug beschrieben, das wahlweise für den Transport körniger Güter oder von Gütern fester Raumform dienen soll und zu diesem Zweck auf einem Teil der durch das Fahrzeug gegebenen Grundfläche einen zusammenklappbaren Behälter zur Aufnahme der körnigen Güter aufweist. Er wird gebildet von Stirn- und Seitenwandplatten innerhalb eines geschlossenen kastenförmigen Gehäuses, von denen die ersteren im ganzen nach vorn bzw. hinten umklappbar sind, während die Seitenwände nach innen umklappbar sind und dabei einen im Boden des Fahrzeuges angeordneten Auslauftrichter abdecken. Alle umgeklappten Behälterwände bilden dann den Boden für die Aufnahme fester Güter, die durch verhältnismäßig kleine Türöffnungen in einer Seitenwand und der Rückwand des kastenförmigen Außengehäuses eingebracht werden müssen. Dies hat zur Folge, daß das Fahrzeug keine voluminösen Güter transportieren kann. Für den Transport körniger Güter ist aufgrund der in ihrer ganzen Fläche umklappbaren Gehäusewände die Aufnahmefähigkeit des Behälters begrenzt, sowohl was die verfügbare Grundfläche als auch die Beschickungshöhe anbelangt. Für den Transport von Flüssigkeiten ist der Behälter aufgrund seiner Konstruktion ungeeignet. Ein solches Fahrzeug bietet daher nur eine begrenzte Ausnutzbarkeit.

Den praktischen Anforderungen dürfte das in der DE-PS 2 308 029 beschriebene Fahrzeug am besten genügen. Bei diesem Fahrzeug ist die Decke des zusammenfaltbaren Behälters an ihrer Unterseite mit Versteifungsrippen ausgerüstet, deren Höhe entsprechend der Neigung des Auflagebodens ausgebildet ist, der zugleich der Boden des Behälters ist und auf dem sich die Versteifungsrippen der abgesenkten Decke abstützen und so eine tragfähige Ladefläche für Güter fester Raumform schaffen. Die zusammenfaltbaren Seitenwände bestehen aus nicht formhaltenden Werkstoffen, insbesondere aus kunststoffkaschierten Geweben. Obwohl ein solches Fahrzeug bei ungestörtem Betrieb sich bewährt hat, weist es doch wie alle anderen bekannten Fahrzeuge, deren Behälter aus flexiblen, druck- und flüssigkeitsdichten Werkstoffen der vorgenannten Art bestehende Wände aufweisen, den Nachteil der Verwundbarkeit durch äußere Einwirkungen auf diese Wände, beispielsweise durch gewaltsames Durchstoßen der Wandung auf. Außerdem ist ein hoher Aufwand für das einwandfreie Zusammenfalten solcher flexibler Wandteile und deren Unterbringung zwischen Boden und Decke beim Zusammenfalten erforderlich.

Die Erfindung geht von einem Fahrzeug nach der DE-PS 2 308 029 aus, das mit einem Behälter ausgerüstet ist, der einen festen, zumindest zum Teil einen unten mit einer Entleerungsöffnung versehenen Trichter bildenden Boden, zusammenlegbare Seitenwände und eine feste Decke besitzt, die beim Zusammenlegen der Seitenwände abgesenkt wird und dann als Ladefläche für Güter fester Raumform dient.

Die Erfindung hat die Aufgabe, ein Fahrzeug der vorausgesetzten Art zu schaffen, das die Nachteile der bekannten Ausführungsformen solcher Fahrzeuge weitestgehend vermeidet.

Eine Ausführung der Erfindung besteht darin, daß die Seitenwände des Behälters aus einer Mehrzahl von dicht aneinander angrenzenden vertikalen und in ihrer Längserstreckung in mehrere Teilglieder unterteilten Schienen aus festen Werkstoffen bestehen, welche Teilglieder sich beim Zusammenlegen des Behälters zusammenfalten und sämtlich gegeneinander sowie, soweit sie an den Behälterboden bzw. dessen Decke angrenzen, auch diesen gegenüber abgedichtet sind, und daß die einzelnen, gelenkig miteinander verbundenen Teilglieder aus je zwei Teilen zusammengesetzt sind, deren eines in das benachbarte andere Teil eingreift bzw. dieses übergreift.

Bei einer anderen Ausführungsform der Erfindung setzen sich die Seitenwände des Behälters aus einer Mehrzahl von in sich geschlossenen Streifen in Bandform aus festen Werkstoffen zusammen, die zumindest zum Teil konisch ausgebildet sind derart, daß sie bei abgesenkter Decke ineinanderliegend auf dem Chassis des Fahrzeuges aufliegen und beim Anheben der Decke von dem mit dieser fest verbundenen äußersten Wandstreifen aufgrund der Konizität der einzelnen Streifen nacheinander jeweils von dem Streifen größeren Querschnitts bis zu dem dem festen Boden nahen Streifen kleinsten Querschnitts mit angehoben werden, so daß in der oberen Endlage der Decke alle die Seitenwände bildenden Streifen mit ihren oberen und unteren Rändern dicht mit den anschließenden Streifen verbunden sind. Das bei dieser Ausführung angewandte Prinzip des Aufbaus eines Behälters aus mehreren ringförmigen Teilen, die teleskopisch ineinander verschiebbar sind, ist in der Technik bereits vielfach angewandt. Beispielsweise setzt sich der in der US-PS 3 746 395 beschriebene verfahrbare Getreidesilo durch horizontale Unterteilung der Seitenwand aus zwei ineinander verschiebbaren Behälterteilen zusammen. Zweck dieser Unterteilung ist dabei ausschließlich das Herabsetzen der Bauhöhe auf ein für den Straßentransport zulässiges Maß. Für eine Anwendung bei einem Mehrzweckfahrzeug der genannten Art ist eine solche Bauform nicht geeignet.

Bei dem Behälteraufbau gemäß der Erfindung wird für die Seitenwände auf die Verwendung nicht formhaltender Werkstoffe, wie Kunststoffe oder kunststoffkaschierte Gewebe, verzichtet und es werden nur feste Werkstoffe verwendet, wodurch die Gefahr von gewaltsamen Einwirkungen auf die Behälterwände von außen her weitgehend vermindert ist. Weitere Vorteile der Erfindung bestehen darin, daß, abgesehen von den notwendigen Mitteln zum Anheben und Absenken der Behälterdecke, die in an sich bekannter Weise z.B. Hydraulikzylinder sein können, keine aufwendigen Mittel und Einrichtungen zur Unterdrucksetzung des Behälterinnenraumes und der damit verbundenen Steuerungen erforderlich sind. Der Behälterinnenraum kann zur weiteren Erhöhung der Betriebssicherheit zusätzlich mit einer Kunststoffhülle ausgekleidet werden, die zweckmäßig auswechselbar ist, was insbesondere dann von Vorteil ist, wenn Güter sehr unterschiedlicher Art beförderbar sein sollen, wie z.B. Lebensmittel (Milch, Getreide, und dergleichen), wobei für die Auskleidung lebensechte Werkstoffe verwendet werden. Damit ist ein solches Fahrzeug im Gegensatz zu den bisher bekannten Mehrzweckfahrzeugen ganz universell verwendbar.

Ein weiterer wesentlicher Vorteil beider Ausführungsformen der Erfindung gegenüber anderen bekannten Mehrzweckfahrzeugkonstruktionen besteht einmal darin, daß die verfügbare Ladefläche beim Transport fester Güter vollständig ausnutzbar ist, ohne Beschränkung bezüglich Art und Größe dieser Güter, und daß auch die Behälter nahezu vollständig die verfügbare Grundfläche ausfüllen.

Die Erfindung wird im folgenden an zwei Ausführungsbeispielen erläutert, von denen das eine das Prinzip des Zusammenfaltens der Seitenwandglieder aufzeigt, während bei dem anderen das Prinzip des Ineinanderschiebens der Wandteile zur Anwendung gebracht ist.

Die beiden Ausführungsbeispiele sind in den Abbildungen dargestellt. Diese zeigen im einzelnen:

Fig. 1 eine Seitenansicht eines Lastkraftwagens, der mit zusammenlegbaren Behältern gemäß dem ersten Ausführungsbeispiel ausgerüstet ist,

Fig. 2 eine Draufsicht auf das Fahrzeug nach Fig. 1,

Fig. 3 in schematischer Darstellung einen Querschnitt durch den faltbaren Behälter,

Fig. 4 die Ansicht von außen einer der Teilschienen, aus denen sich die Behälterseitenwände zusammensetzen,

Fig. 5 eine Seitenansicht einer solchen Teilschiene,

Fig. 6 einen Querschnitt dieser Schienen, der die Art und Weise ihres Zusammenbaus wiedergibt,

Fig. 7 zeigt, ebenfalls nur schematisch, den Aufbau der Behälterseitenwände aus ineinander verschiebbaren Bändern gemäß dem zweiten Ausführungsbeispiel und

Fig. 8 eine perspektivische Darstellung eines Bandabschnittes größerer Konizität, das bei angehobener Decke den Bodentrichter nach außen fortsetzt.

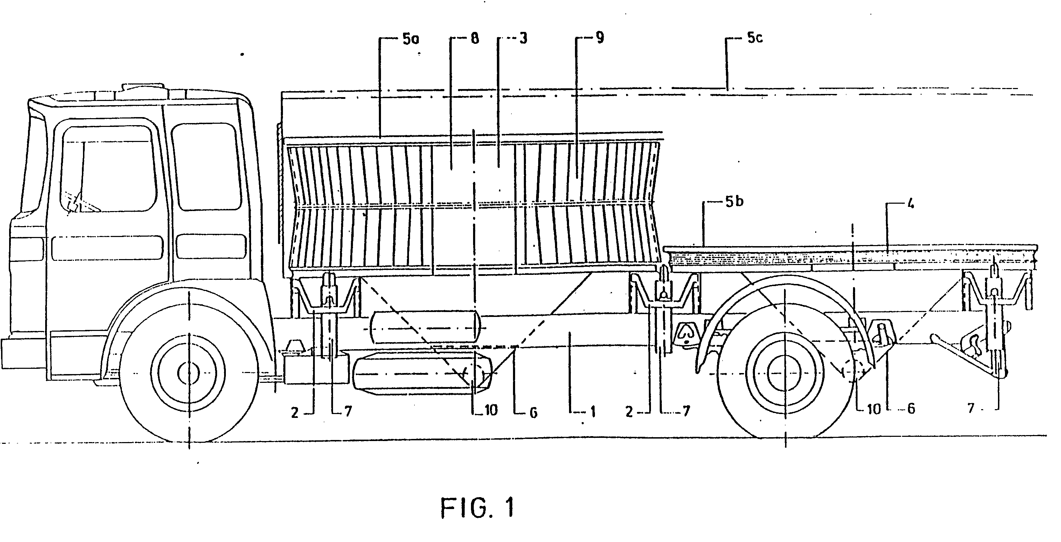

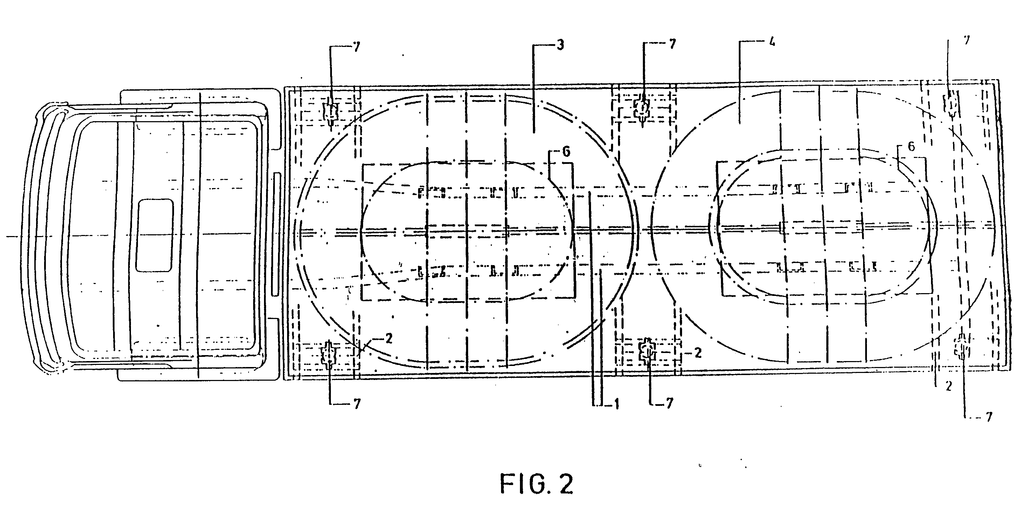

Das in den Abbildungen 1 und 2 dargestellte Fahrzeug ist ein Lastkraftwagen an sich üblicher Bauart, der deshalb im folgenden nur insoweit beschrieben werden soll, als es zur Erläuterung der zusätzlichen Einrichtungen für seine Mehrfachausnutzbarkeit erforderlich ist. Das Fahrzeugchassis weist in an sich bekannter Weise Längs- und Querträger 1 bzw. 2 auf, auf denen in der Längsachse des Fahrzeuges gesehen zwei zusammenlegbare Behälter 3 und 4 für die Beförderung fließfähiger Güter montiert sind, von denen der eine vordere in gefülltem Zustand, der hintere in zusammengelegter Lage dargestellt ist. Je nach Länge des Fahrzeuges können selbstverständlich auch mehr als zwei Behälter vorgesehen sein. Die beiden Behälter 3 und 4 besitzen hier eine gemeinsame Deckplatte 5, die aus einem festen tragfähigen Werkstoff besteht und bei zusammengelegtem Behälter als Ladefläche für Güter beliebiger fester Raumform benutzt wird. Dabei ist die Höhenlage bei gefülltem Behälter mit 5a, bei zusammengelegtem Behälter mit 5b und — gestrichelt eingezeichnet — mit 5c eine noch höhere Lage dargestellt, welche die Decke beim Entleeren des Behälters vorübergehend einnehmen kann. Der Behälterboden wird von einem trichterförmigen festen Bodenteil 6 gebildet, das am oberen Trichterrand eine Querschnittsfläche besitzt, die kleiner ist als die Behälterquerschnittsfläche an der Behälterdecke 5. Die Differenz zwischen diesen beiden Flächen wird bei zusammengelegtem Behälter durch Teile der Seitenwände ausgeglichen, wie später noch näher erläutert werden wird. Am unteren Ende des Trichters befindet sich eine Entleerungsöffnung[10]. Das Anheben und Absenken der Decke erfolgt mit Hilfe von sechs Hydraulikzylindern 7. Die Seitenwände 8 des Behälters setzen sich aus einer Anzahl von Schienen 9 zusammen, die in senkrechter Richtung dicht aneinandergereiht sind und in ihrer Längserstreckung mehrfach unterteilt und gelenkig miteinander verbunden sind. Sie ergeben zusammen mit Decke und Boden einen Behälter 3 bzw. 4 von etwa ovalem Querschnitt. Die als Ladefläche dienende Deicke 5 ist rechteckig und beiden Behältern gemeinsam, es ist jedoch auch ohne weiteres möglich, jedem der Behälter eine eigene Deckplatte zuzuordnen, die auch je für sich angehoben bzw. abgesenkt werden kann, so daß das Fahrzeug auf einem Transportweg gleichzeitig für den Transport der unterschiedlichen Güter bei jeweils halber Ladekapazität benutzt werden kann.

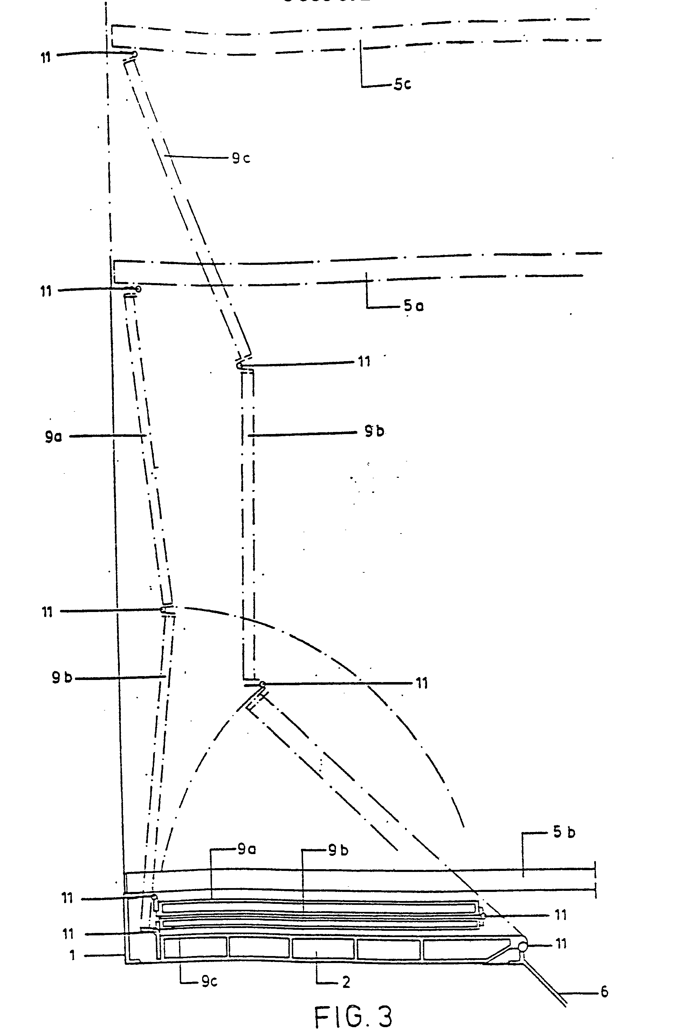

Anhand der Abbildungen 3 bis 5 soll nun der Aufbau der Seitenwände 8 und ihre Zusammenlegbarkeit erläutert werden. Die Schienen 9 sind hier in ihrer Längserstreckung in drei Teilschienen 9a, 9b und 9c unterteilt, die bei entleertem Behälter eben auf dem Chassis aufliegen, wie aus Fig. 3 ersichtlich. Die unterste Teilschiene 9c ist dabei gelenkig mit dem oberen Rand des Trichters 6 verbunden. Ebenso sind die Teilschienen untereinander und die oberste Teilschiene 9a mit der Decke 5 gelenkig verbunden. Die Gelenke sind mit 11 bezeichnet. Der verschiedenen Höhenlagen der Decke sind, wie in Fig. 1, mit 5a, 5b und 5c bezeichnet. Die entsprechenden Stellungen der die Seitenwände bildenden Schienen 9 sind in Fig. 3 gestrichelt eingetragen. Man ersieht daraus, daß beim Anheben der Decke 5 aus ihrer unteren Ruhelage zuerst die Teilschienen 9a und anschließend 9b mit hochgezogen werden. Die Teilschienen 9c liegen in Füllstellung — Deckplatte in Lage 5a — noch auf dem Chassis auf und ergänzen die Bodenfläche von Trichterrand bis zum äußeren Bodenrand. Beim Entleeren des Behälters wird die Decke weiter angehoben bis zur Lage 5c, wobei die Teilschienen 9c ebenfalls angehoben werden und den Trichter mit etwa dem gleichen Neigungswinkel nach außen hin vergrößern, wodurch eine einwandfreie Entleerung des Behälters erzielt wird.

Um bei der beschriebenen Aufbauform der Seitenwände in jeder Lage der Schienen eine sichere Abdichtung derselben untereinander sowie gegenüber Boden und Decke zu gewährleisten, sollen die Schienen 9 wie folgt gestaltet sein:

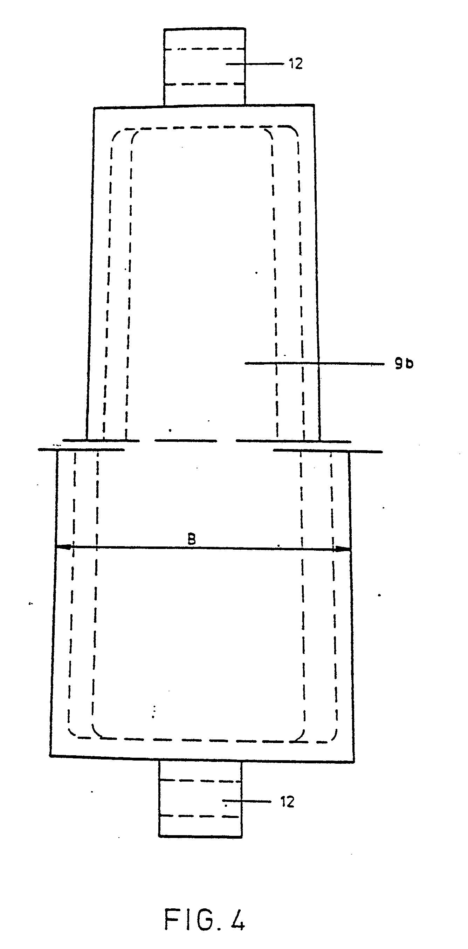

Jede Teilschiene, wie z.B. Schiene 9b in Fig. 4, muß sich in ihrer Längserstreckung, und zwar nach dem Ende hin, das sich beim Zusammenfalten nach dem Behälterinneren hin bewegt, verjüngen. Das Maß dieser Verjüngung hängt ab von dem Krümmungsradius der Behälterseitenwand. Jede Teilschiene ist an ihren Enden mit Augen 12 zur Bildung der Gelenke 11 ausgerüstet.

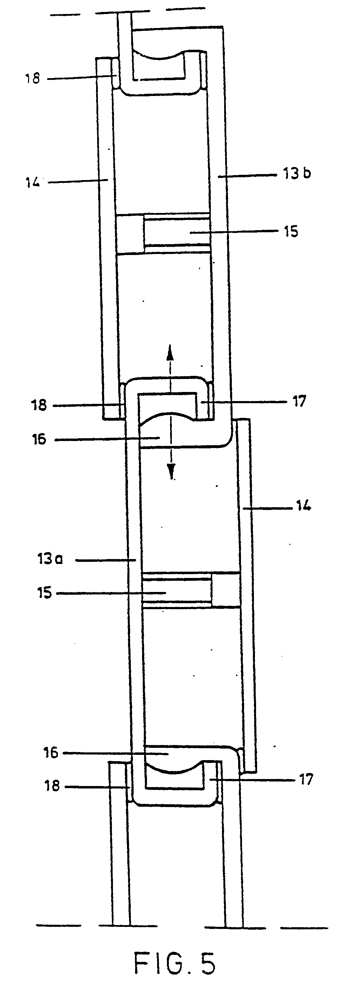

Damit trotz der Veränderung der Schienenbreiten B über die ganze Höhe der Teilschiene die Abdichtung gegenüber den benachbarten Schienen gewährleistet ist, sind die einzelnen Teilschienen, wie Fig. 5 zeigt, aus zwei Teilen 13 und 14 bzw. 15 zusammengesetzt, von denen das eine Teil 13a U-förmig abgewinkelt ist, das andere Teil 14 eine ebene Platte ist, wobei diese beiden Teile durch einen Distanzbolzen 15 miteinander verbunden sind derart, daß zwischen der Platte 14 und dem freien Schenkel des Teiles 13a das Teil 13b einer benachbarten Teilschiene 9 durchgreifen kann, welches nur einfach abgewinkelt ist, wobei diese Abwinkelung 16 zweckmäßig ballig ausgebildet ist. Diese Gestaltung der Teilschienen erlaubt, daß sich die Teilschienen quer gegeneinander bewegen können. Dabei sind zwischen den Abwinkelungen der benachbarten Schienen Dichtungen 17 solcher Dimensionierung und Nachgiebigkeit angebracht, daß sie im Bereich der Querbeweglichkeit die gegenseitige Abdichtung der Teilschienen an ihren Rändern aufrechterhalten. Außerdem sind auch zwischen den einander übergreifenden Zonen der Teilschienen Dichtungsstreifen 18 vorgesehen.

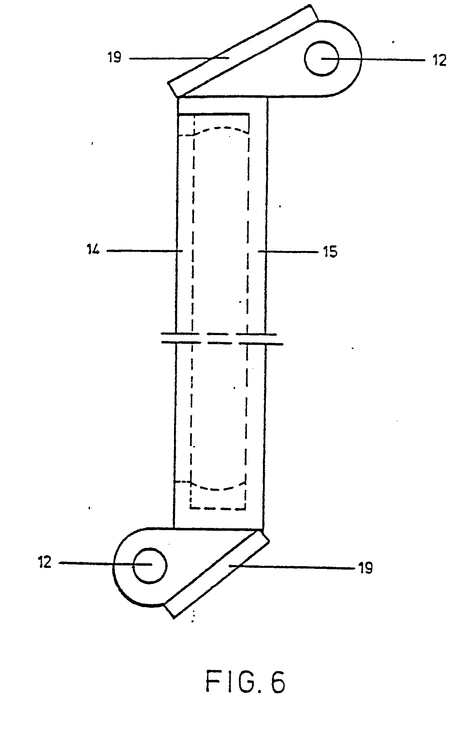

Die Fig. 6 zeigt noch eine Seitenansicht einer Teilschiene 9 mit den an ihren Enden angebrachten Augen 12 zur Bildung der Gelenke, die ebenfalls einen Dichtungsbelag 19 tragen.

Um jegliche Gefahr von Undichtigkeiten auszuschließen ist zweckmäßig der Behälter innen mit einer dichten Kunststoffhülle versehen, die vorzugsweise lose und auswechselbar eingelegt ist, was insbesondere dann von Vorteil ist, wenn in dem Behälter Güter unterschiedlicher Beschaffenheit, z.B. auch aus dem Lebensmittelbereich, transportiert werden sollten. Diese Hüllen haben einen dem Behälterinnenraum angepassten Zuschnitt und legen sich beim Füllen von selbst an die Behälterinnenwände an. Sie sind zur Entleerung von der Entleerungsöffnung aus unten zu öffnen.

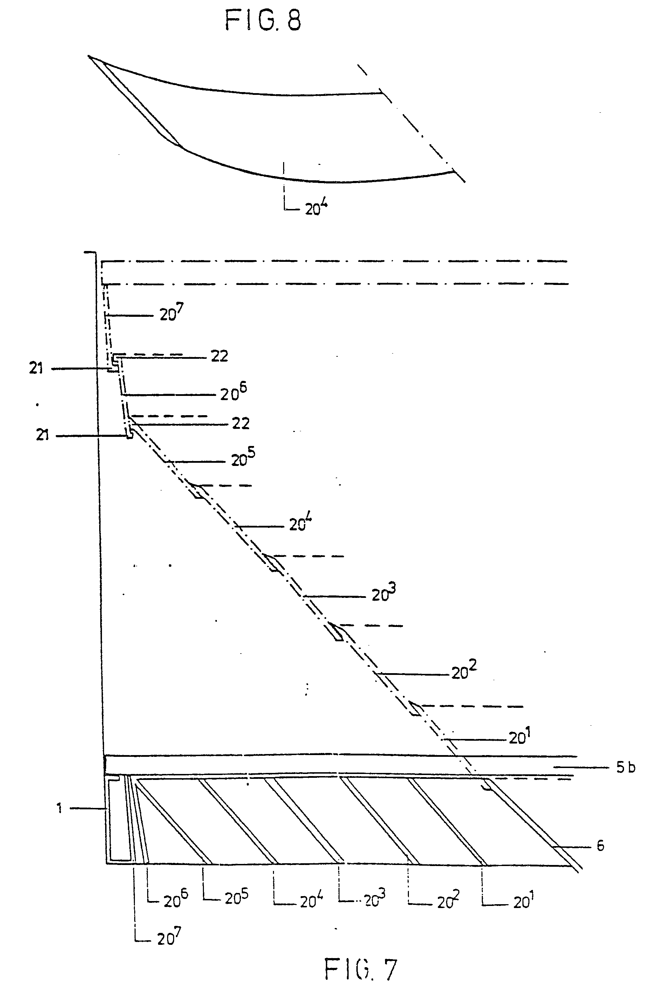

In den Abbildungen Fig. 7 und 8 ist ein zweites Ausführungsbeispiel für die Erfindung gezeigt. Dargestellt ist nur ein etwa halber Querschnitt durch den Behälter. Die ausgezogenen Linien zeigen ihn in zusammengelegtem Zustand, gestrichelt ist der gefüllte Behälter dargestellt. Die Seitenwände werden bei diesem Beispiel von einer Anzahl von in sich geschlossenen Streifen in Bandform aus festem Werkstoff, z.B. Aluminiumblech, gebildet. Nimmt man als Behälterform die gleiche an wie beim ersten Ausführungsbeispiel, so haben die Bänder die Gestalt von ovalen Ringen 20, die untereinander verschiedene Querschnitte aufweisen. Sie sind außerdem zumindest zum Teil konisch ausgebildet derart, daß sie bei abgesenkter Decke 5 ineinanderliegend auf dem von den Trägern 1 und 2 — in der Zeichnung nicht dargestellt — gebildeten Chassis aufliegen und dabei konzentrisch den trichterförmigen Boden 6 umgeben. In der Abbildung 7 sind diese Bänder von innen nach außen mit $20^1$, $20^2$, ... $20^7$ bezeichnet. Dabei weisen die Bänder $20^1$ bis $20^5$ eine Konizität auf, die bei angehobener Decke 5 den Trichter 6 bis zum äußeren Behälterrand hin mit etwa dem gleichen Neigungswinkel erweitert. Nach außen hin schließen sich dann Bänder $20^6$, $20^7$ und gegebenenfalls noch weitere Bänder an, die eine geringere Konizität besitzen bzw. ganz außen annähernd zylindrisch sind. Sie bilden dann zusammen die praktisch senkrechten Seitenwände des Behälters. Diese Aufteilung der Einzelbänder kann selbstverständlich bezüglich Zahl und Konizität auch anders gewählt werden als hier nur beispielsweise dargestellt.

Auf diese Weise können auch noch mehr Bänder ausgebildet sein, sofern sie zylindrisch oder nur schwach konisch sind. Nach innen schließen sich dann die konischen Bänder $20^5$ bis $^1$ an, die beim weiteren Anheben der Decke 5 von dem jeweils vorgeordneten Band aufgrund der Konizität von selbst mit angehoben werden, bis die Decke ihre Endlage 5a erreicht hat. Die Randzonen sämtlicher Bänder sind wieder mit Dichtungsmaterial belegt. Der zweckmäßig hydraulische Antrieb der Decke ist so ausgebildet, daß die Decke 5 an ihrer oberen Endlage verriegelt wird und dabei unter Zugspannung die Bänder dicht zusammenhält. Fig. 8 zeigt in perspektivischer Darstellung einen Teil — etwa 1/4 des Umfanges — eines der konischen Bandringe. Zahl und Wandhöhe der einzelnen Bänder können variiert werden je nach den Erfordernissen des mit solchen Behältern ausgerüsteten Fahrzeuges.

Die Erfindung ist nicht auf ihre Anwendung bei Lastkraftwagen beschränkt, sie ist in gleicher Weise auch bei schienengebundenen Fahrzeugen anwendbar.

**Patentansprüche**

1. Fahrzeug für den wahlweisen Transport von Gütern fester Raumform oder von fließfähigen, wie pulverförmigen, körnigen oder flüssigen Gütern, für deren Transport ein Behälter (3, 4) mit zusammenlegbaren Seitenwänden (9), einem festen Boden (6), der zumindest zum Teil einen unten mit einer Entleerungsöffnung (10) versehenen Trichter bildet, sowie mit fester Decke (5), die beim Zusammenlegen der Seitenwände (9) abgesenkt wird und als Ladefläche für Güter fester Raumform dient, vorgesehen ist, dadurch gekennzeichnet, daß die Seitenwände (9) des Behälters (3, 4) aus einer Mehrzahl von dicht aneinander angrenzenden vertikalen und in ihrer Längserstreckung in mehrere Teilglieder (9a, 9b, 9c) unterteilten Schienen (9) aus festen Werkstoffen bestehen, welche Teilglieder sich beim Zusammenlegen des Behälters (3, 4) zusammenfalten und sämtlich gegeneinander sowie, soweit sie an den Behälterboden (6) bzw. dessen Decke (5) angrenzen, auch diesen gegenüber abgedichtet sind, und daß die einzelnen, gelenkig miteinander verbundenen Teilglieder (9a, 9b, 9c) aus je zwei Teilen (13, 14) zusammengesetzt sind, deren eines in das benachbarte andere Teil (13 bzw. 14) eingreift bzw. dieses übergreift.

2. Fahrzeug für den wahlweisen Transport von Gütern fester Raumform oder von fließfähigen, wie pulverförmigen, körnigen oder flüssigen Gütern für deren Transport ein Behälter (3, 4) mit zusammenlegbaren Seitenwänden (20), einem festen Boden (6), der zumindest zum Teil einen unten mit einer Entleerungsöffnung (10) versehenen Trichter bildet, sowie mit fester Decke (5), die beim Zusammenlegen der Seitenwände (20) abgesenkt wird und als Ladefläche für Güter fester Raumform dient, vorgesehen ist, dadurch gekennzeichnet, daß die Seitenwände (20) sich aus einer Mehrzahl von in sich geschlossenen Streifen ($20^1$ bis $20^7$) in Bandform aus festen Werkstoffen zusammensetzen, die zumindest zum Teil derart konisch ausgebildet sind, daß sie bei abgesenkter Decke (5) ineinanderliegend auf dem Chassis (1, 2) des Fahrzeuges aufliegen und beim Anheben der Decke (5) von dem mit der Decke (5) fest verbundenen äußersten Wandstreifen ($20^7$) aufgrund der Konizität der einzelnen Streifen ($20^1$ bis $20^7$) nacheinander jeweils von dem Streifen größeren Querschnitts bis zu dem dem festen Boden (6) nahen Streifen ($20^1$) kleinsten Querschnitts mit angehoben werden, so daß alle die Seitenwände (20) bildenden Streifen ($20^1$ bis $20^7$) in der oberen Endlage (5a) der Decke (5) mit ihren oberen und unteren Rändern dicht mit den anschließenden Streifen verbunden sind.

3. Fahrzeug nach Anspruch 1, dadurch gekennzeichnet, daß die Schienen (9) aus Leichtmetall, z.B. Aluminiumguß bestehen und so ausgebildet sind, daß sie beim Zusammenfalten in begrenztem Maße querbeweglich sind und auf diese Weise ein gegenseitiges Verschieben benachbarter Teilschienen ermöglichen.

4. Fahrzeug nach Anspruch 1 oder 3, dadurch gekennzeichnet, daß das eine Teil (13) einen U-förmigen Querschnitt besitzt und das andere Teil eine ebene Platte (14) ist, die mit dem U-förmigen Teil (13) durch einen Distanzbolzen (15) lösbar verbunden ist, wobei beide Teile (13, 14) einen derartigen Abstand voneinander besitzen, daß das gegenseitige Verschieben benachbarter Teilschienen gewährleistet ist.

5. Fahrzeug nach Anspruch 1, 3 oder 4, dadurch gekennzeichnet, daß zwischen den gegeneinander beweglichen Randzonen benachbarter Teilschienen (13, 14) Dichtungen (17, 18) vorgesehen sind, die so beschaffen sind, daß sie die beim Zusammenfalten erforderliche Querbeweglichkeit unter Aufrechterhaltung der Abdichtung bewährleisten.

6. Fahrzeug nach Anspruch 1 oder 3 bis 5, dadurch gekennzeichnet, daß in Abhängigkeit von der Querschnittsform des Behälters die einzelnen Schienen (9) unterschiedliche Breite (B) besitzen und in Längsrichtung sich in ihrer Breite zu dem Ende hin verjüngen, das beim Absenken der Decke (5) sich nach innen bewegt.

7. Fahrzeug nach Anspruch 1 oder 3 bis 6, dadurch gekennzeichnet, daß der Boden (6) des Behälters in seinem mittleren Bereich einen feststehenden Trichter mit einer Entleerungsöffnung (10) in seinem Zentrum bildet und daß die restliche Bodenfläche von Trichterrand bis zu den senkrechten Seitenwänden des Behälters von den untersten Teilgliedern (9c) der Schienen (9) gebildet werden, die bei angehobener Behälterdecke (5) den Trichter bis zu den senkrechten Seitenwänden des Behälters mit etwa demselben Neigungswinkel weiterführen (Entleerungsstellung).

8. Fahrzeug nach Anspruch 2, dadurch gekennzeichnet, daß einer oder mehrere der oberen Streifen (20) der Seitenwände, die sich an den mit der Decke (5) fest verbundenen äußersten Streifen (20⁷) anschließen, ebenso wie der genannte äußerste Streifen selbst zumindest angenähert zylindrische Gestalt besitzen, wobei sie bei abgesenkter Decke (5) eng ineinander liegen und beim Anheben der Decke durch an ihren unteren Rändern angeordnete, nach innen gerichtete Abwinkelungen oder Nocken (21) den jeweils nächstfolgenden Streifen, der an seinem oberen Rand ebensolche, jedoch nach außen gerichtete Abwinkelungen oder Nocken (22) besitzt, nach oben mitnehmen.

9. Fahrzeug nach Anspruch 2 oder 8, dadurch gekennzeichnet, daß der Boden des Behälters in seinem mittleren Bereich von einem feststehenden Trichter (6) mit einer Entleerungsöffnung (10) in seinem Zentrum gebildet wird und daß der restliche Boden vom Trichterrand bis zu den senkrechten oder annähernd senkrechten, Seitenwandteile bildenden Streifen (20⁶, 20⁷) von den dazwischenliegenden Streifen (20¹ bis 20⁵) gebildet wird, deren Konizität dem Neigungswinkel des Trichters entspricht.

10. Fahrzeug nach Anspruch 2, 8 oder 9, dadurch gekennzeichnet, daß die Streifen (20) aus Leichtmetall bestehen und längs ihrer Ränder innen oder außen mit einem hochwertigen Dichtungsmaterial belegt sind.

11. Fahrzeug nach einem der vorhergehenden Ansprüche, dadurch gekennzeichnet, daß die Querschnittsform des Behälters (3, 4) annähernd oval ist und daß auf dem Chassis (1, 2) in der Längsachse des Fahrzeugs hintereinander mehrere Behälter (3, 4) angeordnet sind, denen eine rechteckförmige Deckplatte (5) als Ladepritsche zugeordnet ist.

12. Fahrzeug nach einem der vorhergehenden Ansprüche, dadurch gekennzeichnet, daß der Behälter zusätzlich innen mit einer vorzugsweise auswechselbaren Hülle aus einem für das jeweilige Füllgut geeigneten Kunststoff ausgekleidet ist.

## Claims

1. A vehicle for transporting goods in solid form or goods which can flow such as powders, grains or fluids as desired in which there is provided a container (3, 4) for transporting the goods, the container having collapsible side walls (9), a solid base (6), at least a part of which forms a hopper provided with a drainage opening (10) at the bottom, and a solid top (5) which is lowered when the side walls (9) collapse and serves as a loading surface for goods in solid form, characterised in that the side walls (9) of the container (3, 4) comprise a plurality of closely adjacent vertical bars (9) made of solid materials and subdivided longitudinally into several members (9a, 9b, 9c) which fold up as the container (3, 4) collapses and are all sealed with respect to each other and — where they adjoin the base (6) of the container or the top (5) — with respect to the top or base; and that the individual members (9a, 9b, 9c) which are linked together each comprise two parts (13, 14), one of which engages into or over the neighbouring part (13, or 14).

2. A vehicle for transporting goods in solid form or goods which can flow such as powders, grains or fluids as desired, in which there is provided a container (3, 4) for transporting the goods, the container having collapsible side walls (20), a solid base (6), at least a part of which forms a hopper provided with a drainage opening (10) at the bottom, and a solid top (5) which is lowered when the side walls (20) collapse and serves as a loading surface for goods in solid form, characterised in that the side walls (20) comprise a plurality of continuous strips (20¹, to 20⁷) in the form of bands and made of solid materials and are formed to be at least partly conical such that they are supported on the chassis (1, 2) of the vehicle, one inside another when the top (5) is lowered, and such that, as the top (5) is raised, starting from the outer wall strip (20⁷) which is firmly fixed to the top (5), and as a result of the conicity of the individual strips (20¹ to 20⁷), they are also raised one after another, in each case by the strip of greater cross-section, to the strip (20¹) which has the smallest cross-section and is close to the solid base (6), so that all of the strips (20¹ to 20⁷) which form the side walls (20) are sealed with respect to the next strip at their upper and lower edges when the top (5) is in its fully raised position (5a).

3. A vehicle according to claim 1 characterised in that the bars (9) comprise a light metal, e.g. cast aluminium, and are so formed that during collapsing they are transversely movable to a restricted extent and thereby facilitate reciprocal displacement of adjacent bar parts.

4. A vehicle according to claim 1 or 3 characterised in that one part (13) has a U-shaped cross section and the other part is a flat plate (14) which is detachably connected to the U-shaped part (13) by means of a spacing pin (15) and both parts (13, 14) have such a spacing from each other that adjacent bar parts can be reciprocally displaced.

5. A vehicle according to claim 1, 2 or 4 characterised in that seals (17, 18) are provided between relatively movable edge regions of adjacent bar parts (13, 14) and are such that during collapsing they ensure the necessary transverse movement while maintaining the sealing.

6. A vehicle according to claim 1 or 3 to 5 characterised in that in dependence on the cross sectional shape of the container, the individual bars (9) have a varying width (B) and taper in width longitudinally towards the end which moves inwardly as the top (5) is lowered.

7. A vehicle according to claim 1 or 3 to 6, characterised in that the central region of the container base (6) forms a fixed hopper with a drainage opening (10) at its centre; and that the rest of the base area from the edge of the hopper to the vertical side walls of the container is formed by the lowest members (9c) of the bars (9) which, when the top of the container is raised, extend the hopper up to the vertical side walls of the container at approximately the same angle of inclination (drainage position).

8. A vehicle according to claim 2 characterised in that one or more of the upper strips (20) of the side walls, which follow on from the outer strip ($20^7$) which is fixed to the top (5), have an at least approximately cylindrical shape, as does the said outer strip itself, and lie one inside the other close together when the top (5) is lowered, and as the top is raised they entrain the next respective strip which has outwardly directed angled portions or cams (22) at its upper edge, in an upward direction, by means of angled portions or cams (21) which are inwardly directed and at their lower edges.

9. A vehicle according to claim 2 or 8 characterised in that the centre region of the container base is formed by a fixed hopper (6) with a drainage opening (10) at its centre and that the rest of the base from the edge of the hopper to the strips ($20^6$, $20^7$) forming the vertical or approximately vertical parts of the side walls, is formed by the intermediate strips ($20^1$ to $20^5$) the conicity of which corresponds to the angle of inclination of the hopper.

10. A vehicle according to claims 2, 8 or 9 characterised in that the strips (20) comprise light metal and are coated on the inside or on the outside along their edges with a high quality sealant.

11. A vehicle according to any one of the preceding claim characterised in that the cross sectional shape of the container (3, 4) is approximately oval and that several containers (3, 4) are arranged one behind another on the chassis (1, 2) along the longitudinal axis of the vehicle, a rectangular cover plate (5) in the form of a loading platform being associated with the said containers.

12. A vehicle according to any one of the preceding claims characterised in that the container is also lined on the inside with a sheath which is preferably interchangeable, comprising a plastics appropriate to the filling material in each case.

## Revendications

1. Véhicule permettant le transport alterné de produits de formes définies ou de produits en vrac tels que des produits pulvérulents, granuleux ou liquides, et comportant un récipient (3, 4) qui est constitué par un fond rigide (6) et formant au moins partiellement un entonnoir qui présente à sa partie inférieure une ouverture de vidange (10) par des parois latérales pliantes (9) et par une paroi supérieure rigide (5) qui, lors du pliage des parois latérales (9), est abaissée pour servir ensuite de surface de chargement pour des produits solides, caractérisé en ce que les parois latérales (9) du récipient (3, 4) sont constituées par un grand nombre de rails verticaux (9) placés étroitement les uns à côté des autres et subdivisés dans le sens longitudinal en plusieurs éléments partiels (9a, 9b, 9c) et qui sont réalisés en une matière solide, les éléments partiels se repliant complètement les uns contre les autres lors du pliage du récipient dans la mesure où ils sont adjacents au fond (6) et à la paroi horizontale supérieure (5) du récipient vis-à-vis desquels ils sont également étanchéifiés et en ce que les différents éléments partiels (9a, 9b, 9c), articulés les uns aux autres, sont composés chacun de deux éléments (13, 14) dont l'un s'engage dans ou sur l'autre élément voisin (13 ou 14).

2. Véhicule permettant le transport alterné de produits de formes définies ou de produits en vrac tels que de produits pulvérulents, granuleux ou liquides et comportant un récipient (3, 4) qui est constitué par un fond rigide (6) et formant au moins partiellement un entonnoir qui présente à sa partie inférieure un ouverture de vidange (10), par des parois latérales pliantes (20) et par une paroi supérieure rigide (5) qui, lors du pliage des parois latérales (20), est abaissée pour servir ensuite de surface de chargement pour des produits solides, caractérisé en ce que les parois latérales (20) sont composées par un grand nombre de bandes sans fin ($20^1$ à $20^7$) en matière résistante et qui sont réalisées au moins partiellement de façon conique afin qu'elles reposent sur le châssis (1, 2) du véhicule, en s'encastrant les unes dans les autres lorsque la paroi horizontale supérieure (5) est abaissée et qu'elles soient soulevées successivement, grâce à leur conicité, par la bande ($20^7$) de plus grand diamètre, reliée fixement à la paroi horizontale supérieure (5), lors du mouvement ascendant de cette dernière, les unes après les autres, à chaque fois la bande de plus petit diamètre par la band adjacente de plus grand diamètre jusqu'à la bande de plus petit diamètre ($20^1$) reliée au fond rigide (6) de sorte que, dans la position (5a) de fin de course supérieure de la paroi horizontale (5), toutes les bandes adjacentes ($20^1$ à $20^7$) formant les parois latérales (20) soient reliées, de façon étanche, les unes aux autres par leurs bords supérieurs et inférieurs.

3. Véhicule suivant la revendication 1, caractérisé en ce que les rails (9) sont en un alliage léger, par exemple en fonte d'aluminium, et sont réalisés de façon à être mobiles transversalement dans une certaine mesure lors de leur repliage afin de permettre un déplacement des rails partiels voisins les uns par rapport aux autres.

4. Véhicule suivant l'une des revendications 1 ou 3, caractérisé en ce que l'un des éléments (13) présente une section en U tandis que l'autre élément (14) se présente sous la forme d'une plaque plane qui est reliée de façon détachable avec l'élément (13) en forme de U par l'intermédiaire d'un axe d'écartement (15), les deux éléments (13, 14) se trouvant à une distance l'un de l'autre qui permet le déplacement des rails partiels voisins les uns par rapport aux autres.

5. Véhicule suivant l'une des revendications 1, 3 ou 4, caractérisé en ce que les zones marginales, déplaçables les unes par rapport aux autres, des rails partiels voisins (13, 14) sont revêtues de joints (17, 18) qui permettent la mobilité transversale nécessaire au repliage tout en maintenant l'étanchéité.

6. Véhicule suivant l'une des revendications 1 ou 3 à 5, caractérisé en ce que les différents rails (9) sont de largeurs différentes (B) en fonction de la section transversale du récipient et en ce que leur largeur diminue progressivement en direction de l'extrémite qui se déplace vers l'intérieur lors de l'abaissement de la plaque de recouvrement (5).

7. Véhicule suivant l'une des revendications 1 ou 3 à 6, caractérisé en ce que le fond (6) du récipient forme dans sa zone centrale un entonnoir fixe présentant en son centre une ouverture d'évacuation (10) et en ce que la surface restante du fond allant jusqu'aux parois latérales verticales du récipient est formée par les éléments inférieurs (9c) des rails (9) qui, à l'état soulevé de la plaque de recouvrement (5), assurent la continuité de l'entonnoir jusqu'aux parois latérales verticales du récipient avec un angle d'inclinaison qui correspond sensiblement à celui de l'entonnoir (position de vidange).

8. Véhicule suivant la revendication 2, caractérisé en ce qu'une ou plusieurs bandes supérieures (20) des parois latérales faisant suite à la bande ($20^7$) tout à fait à l'extérieur et reliée fixement à la plaque de recouvrement (5) ainsi que la bande extérieure ($20^7$) elle-même présentent une forme sensiblement cylindrique de façon que ces bandes s'encastrent étroitement les unes dans les autres lorsque la plaque de recouvrement (5) est abaissée et qu'elles soulèvent, lors du mouvement ascendant de la plaque (5), grâce à des parties ou ergots (21) repliés vers l'intérieur et disposés aux bords inférieurs, à chaque fois la bande qu'elles précèdent et qui présente des parties en saillie ou ergots analogues (22) sur son bord supérieur mais qui sont repliés vers l'extérieur.

9. Véhicule suivant l'une des revendications 2 ou 8, caractérisé en ce que la partie centrale du fond est formée par un entonnoir fixe (6) présentant en son centre une ouverture d'évacuation (10) et en ce que la partie restante du fond, s'étendant jusqu'aux bandes ($20^6$, $20^7$) constituant des parties de parois latérales et sensiblement verticales, est formée par les bandes intermédiaires ($20^1$ à $20^5$) dont la conicité correspond à l'angle d'inclinaison de l'entonnoir.

10. Véhicule suivant l'une des revendications 2, 8 ou 9, caractérisé en ce que les bandes (20) sont réalisées en un alliage léger et sont revêtues à l'intérieur ou à l'extérieur de leurs bords d'une matière d'étanchéité de bonne qualité.

11. Véhicule suivant l'une des revendications 1 à 10, caractérisé en ce que la section transversale du récipient (3, 4) présente une forme sensiblement ovale et en ce que sur le châssis (1, 2), vu dans le sens longitudinal du véhicule, sont disposés plusieurs récipients (3, 4) les uns à la suite des autres et qui comportent une plaque de recouvrement rectangulaire (5) servant de surface de chargement.

12. Véhicule suivant l'une des revendications 1 à 11, caractérisé en ce que le récipient est revêtu à l'intérieur d'une enveloppe supplémentaire, de préférence amovible et réalisée en une matière synthétique appropriée à la nature du produit à transporter.

FIG. 1

FIG. 2

0 008 392

FIG. 3

FIG. 4

FIG. 5

19 — 12

14 — — 15

12 — — 19

FIG. 6

## FIG. 8

$20^4$

$20^7$

$22$

$21$

$20^6$

$22$

$21$

$20^5$

$20^4$

$20^3$

$20^2$

$20^1$

$5\,b$

$1$

$6$

$20^6$   $20^5$   $20^4$   $20^3$   $20^2$   $20^1$

$20^7$

## FIG. 7

7